# EUROPÄISCHE PATENTANMELDUNG

(11) **EP 1 143 160 A2**
(43) Veröffentlichungstag der Anmeldung: **10.10.2001**
(21) Anmeldenummer: 01105616.5
(22) Anmeldetag: 07.03.2001
(51) Int. Cl.: F16D 21/06

(54) **Doppelkupplungsanordnung**

(30) Priorität: 04.04.2000 DE 10016604
(71) Anmelder: Mannesmann Sachs Aktiengesellschaft, 97424 Schweinfurt (DE)
(72) Erfinder: Dau, Andreas, Dipl.-Ing., 97080 Würzburg (DE); Orlamünder, Andreas, Dipl.-Ing., 97422 Schweinfurt (DE); Feldhaus, Reinhard, Dipl.-Ing., 97714 Ebenhausen (DE); Randow, Jorg, Dr.-Ing., 97509 Stammheim (DE); Röll, Gerhard, Dipl.-Ing., 97247 Eisenheim (DE); Schierling, Bernhard, Dipl.-Ing., 97273 Kürnach (DE); Peterseim, Michael, Dipl.Ing., 97493 Bergheinfeld (DE)

(57) **Zusammenfassung**

Eine Doppelkupplungsanordnung umfasst einen ersten Kupplungsbereich (12) zur wahlweisen Herstellung einer Drehmomentübertragungsverbindung zwischen einem Antriebsorgan und einem ersten Abtriebsorgan (20) und einen zweiten Kupplungsbereich (14) zur wahlweisen Herstellung einer Drehmomentübertragungsverbindung zwischen dem Antriebsorgan und einem zweiten Abtriebsorgan (22), sowie einen gemeinsamen Ausrückmechanismus (38, F), durch welchen der erste Kupplungsbereich (12) und der zweite Kupplungsbereich (14) jeweils zur Herstellung beziehungsweise zum Aufheben eines Drehmomentübertragungszustands betätigbar sind.

## Beschreibung

Die vorliegende Erfindung betrifft eine Doppelkupplungsanordnung, umfassend einen ersten Kupplungsbereich zur wahlweisen Herstellung einer Drehmomentübertragungsverbindung zwischen einem Antriebsorgan und einem ersten Abtriebsorgan und einen zweiten Kupplungsbereich zur wahlweisen Herstellung einer Drehmomentübertragungsverbindung zwischen dem Antriebsorgan und einem zweiten Abtriebsorgan.

Derartige Doppelkupplungsanordnungen werden beispielsweise in Verbindung mit Getrieben eingesetzt, die zwei Getriebeeingangswellen aufweisen. Je nachdem, welche der Getriebeeingangswellen durch jeweilige Aktivierung eines zugeordneten Kupplungsbereichs im Drehmomentübertragungsweg liegt, können dann verschiedene Gangstufen eingeschaltet werden. Zur Durchführung von Ein- und Ausrückvorgängen ist es bei derartigen Doppelkupplungsanordnungen bekannt, jedem Kupplungsbereich einen separaten Ausrückmechanismus zuzuordnen, so dass je nach Ansteuerung oder Aktivierung eines jeweiligen der Ausrückmechanismen einer der Kupplungsbereiche ausgerückt werden kann, der andere jedoch eingerückt ist oder eingerückt gehalten ist. Dies bedingt jedoch einen relativ großen baulichen Aufwand, da auf kleinem Bauraum die beiden Ausrückmechanismen angeordnet werden müssen, beispielsweise als radial ineinander gestaffelte Ausrückkolben-Zylinder-Anordnungen.

Es ist die Aufgabe der vorliegenen Erfindung, eine gattungsgemäße Doppelkupplungsanordnung derart weiterzubilden, dass sie bei einfacherem Aufbau zur Durchführung von Ein- bzw. Ausrückvorgängen der verschiedenen Kupplungsbereiche vereinfacht aktiviert werden kann.

Erfindungsgemäß wird diese Aufgabe gelöst durch eine Doppelkupplungsanordnung, umfassend einen ersten Kupplungsbereich zur wahlweisen Herstellung einer Drehmomentübertragungsverbindung zwischen einem Antriebsorgan und einem ersten Abtriebsorgan und einen zweiten Kupplungsbereich zur wahlweisen Herstellung einer Drehmomentübertragungsverbindung zwischen dem Antriebsorgan und einem zweiten Abtriebsorgan.

Die erfindungsgemäße Doppelkupplungsanordnung ist gekennzeichnet durch einen gemeinsamen Ausrückmechanismus, durch welchen der erste und der zweite Kupplungsbereich jeweils zur Herstellung beziehungsweise zum Aufheben des Drehmomentübertragungszustands betätigbar sind.

Erfindungsgemäß wird also von dem Prinzip abgewichen, für jeden Kupplungsbereich einen separaten Ausrückmechanismus bereitzustellen, die dann separat ansteuerbar sind. Vielmehr wird nunmehr ein einziger derartiger Mechanismus vorgesehen, der je nach Ansteuerart dann dazu führt, dass einer der Kupplungsbereiche eingerückt werden kann und der andere ausgerückt werden kann, oder dass ggf. auch beide Kupplungsbereiche in teilweise drehmomentübertragendem Zustand gehalten werden. Dies vereinfacht sowohl den Aufbau als auch die Maßnahmen zum Ansteuern einer derartigen Kupplungsanordnung erheblich.

Vorzugsweise ist erfindungsgemäß dann weiter vorgesehen, dass dann, wenn durch den Ausrückmechanismus ein Kupplungsbereich zum Herstellen des Drehmomentübertragungszustands betätigt ist, der andere Kupplungsbereich zum Aufheben des Drehmomentübertragungszustands betätigt ist.

Bei der erfindungsgemäßen Doppelkupplungsanordnung kann ein Kraftspeicher vorgesehen sein, durch welchen wenigstens einer der Kupplungsbereiche in seinen Drehmomentübertragungszustand vorgespannt oder vorspannbar ist.

Ferner ist vorzugsweise zur Durchführung von Ein- bzw. Ausrückvorgängen der verschiedenen Kupplungsbereiche ein Krafterzeugungsmechanismus vorgesehen zur Erzeugung einer Betätigungskraft, durch welche wenigstens einer der Kupplungsbereiche in seinen Drehmomentübertragungszustand bringbar ist.

Um den Ansteueraufwand für den Krafterzeugungsmechanismus so gering als möglich zu halten, wird vorgeschlagen, dass durch den Kraftspeicher einer der Kupplungsbereiche in seinen Drehmomentübertragungszustand vorgespannt ist, und dass durch den Krafterzeugungsmechanismus der Kraftspeicher zum Aufheben des Drehmomentübertragungszustands des einen Kupplungsbereichs und zum Herstellen des Drehmomentübertragungszustands des anderen Kupplungsbereichs bewegbar ist. Die Kupplungsanordnung wird somit durch den Kraftspeicher immer derart vorgespannt, dass einer der Kupplungsbereiche eingerückt ist, um den anderen dann einzurücken, muss der Krafterzeugungsmechanismus erregt werden.

Bei einer weiteren vorteilhaften Ausgestaltungsform kann vorgesehen sein, dass der Kraftspeicher ein bistabiler Kraftspeicher ist, dass der Kraftspeicher durch den Krafterzeugungsmechanismus zwischen seinen beiden stabilen Zuständen umschaltbar ist, und dass in jedem der stabilen Zustände durch den Kraftspeicher einer der Kupplungsbereiche in seinen Drehmomentübertragungszustand vorgespannt ist. Bei dieser Variante wird jeder der Kupplungsbereiche durch den Kraftspeicher in seine Einrückstellung vorgespannt, wenn der Kraftspeicher, induziert durch den Krafterzeugungsmechanismus, in die entsprechende der beiden stabilen Stellungen gebracht wird.

Bei einer weiteren alternativen Ausgestaltungsvariante kann eine Übertragungshebelanordnung vorgesehen sein, durch welche eine Betätigungskraft des Krafterzeugungsmechanismus auf den ersten Kupplungsbereich und den zweiten Kupplungsbereich übertragbar ist.

Vorzugsweise ist der Aufbau der erfindungsgemäßen Doppelkupplungsanordnung derart, dass der erste Kupplungsbereich eine erste Reibfläche aufweist, welche zur Anlage an einer ersten Kupplungsscheibenanordnung bringbar ist, dass der zweite Kupplungsbereich eine erste Reibfläche aufweist, welche zur Anlage an einer zweiten Kupplungsscheibe bringbar ist, und dass dem ersten und dem zweiten Kupplungsbereich zugeordnet eine Zwischenscheibenanordnung mit einer zweiten Reibfläche für den ersten Kupplungsbereich und einer zweiten Reibfläche für den zweiten Kupplungsbereich vorgesehen ist.

Eine Möglichkeit, in einfacher Weise zwischen den beiden Kupplungsbereichen umschalten zu können, wird dadurch erhalten, dass zur Herstellung des Drehmomentübertragungszustands von einem der Kupplungsbereiche und zum Aufheben des Drehmomentübertragungszustands des anderen Kupplungsbereichs bei im Wesentlichen feststehenden zweiten Reibflächen von erstem Kupplungsbereich und zweitem Kupplungsbereich die erste Reibfläche des einen Kupplungsbereichs auf die zweite Reibfläche des einen Kupplungsbereichs zu bewegbar ist und die erste Reibfläche des anderen Kupplungsbereichs von der zweiten Reibfläche des anderen Kupplungsbereichs weg bewegbar ist. Dabei ist es dann vorteilhaft, wenn ein die erste Reibfläche des ersten Kupplungsbereichs tragendes Bauteil und ein die erste Reibfläche des zweiten Kupplungsbereichs tragendes Bauteil mit dem Ausrückmechanismus zur Bewegung bezüglich der jeweiligen zweiten Reibfläche gekoppelt sind.

Alternativ kann zur sehr einfachen Herstellung bzw. Aufhebung eines jeweiligen Drehmomentübertragungszustands vorgesehen sein, dass zur Herstellung des Drehmomentübertragungszustands von einem der Kupplungsbereiche und zum Aufheben des Drehmomentübertragungszustands des anderen Kupplungsbereichs bei im Wesentlichen feststehenden ersten Reibflächen des ersten Kupplungsbereichs und des zweiten Kupplungsbereichs die zweite Reibfläche des einen Kupplungsbereichs auf die erste Reibfläche des einen Kupplungsbereichs zu bewegbar ist und dabei die zweite Reibfläche des anderen Kupplungsbereichs von der ersten Reibfläche des anderen Kupplungsbereichs weg bewegbar ist.

Um eine Veränderung der Betriebscharakteristik der erfindungsgemäßen Doppelkupplungsanordnung auch nach längerer Betriebslebensdauer soweit als möglich zu vermeiden, weist vorzugsweise die erfindungsgemäße Doppelkupplungsanordnung ferner eine Verschleißkompensationsanordnung auf zum Kompensieren von bei dem ersten Kupplungsbereich oder/und dem zweiten Kupplungsbereich aufgetretenem Verschleiß.

Die vorliegende Erfindung wird nachfolgend mit Bezug auf die beiliegenden Zeichnungen anhand bevorzugter Ausgestaltungsvarianten beschrieben. Es zeigt:
- Fig. 1: eine Teil-Längsschnittansicht einer ersten Ausgestaltungsform einer erfindungsgemäßen Doppelkupplungsanordnung;
- Fig. 2: eine Ansicht der Anordnung der Fig. 1 in Blickrichtung II in Fig. 1;
- Fig. 3: eine der Fig. 1 entsprechende Ansicht einer alternativen Ausgestaltungsart der erfindungsgemäßen Doppelkupplungsanordnung;
- Fig. 4: eine weitere der Fig. 1 entsprechende Ansicht einer alterntiven Ausgestaltungsart der erfindungsgemäßen Doppelkupplungsanordnung;
- Fig. 5: eine weitere der Fig. 1 entsprechende Ansicht einer alternativen Ausgestaltungsart der erfindungsgemäßen Doppelkupplungsanordnung;
- Fig. 6: eine weitere der Fig. 1 entsprechende Ansicht einer als nasslaufende Kupplung ausgebildeten erfindungsgemäßen Doppelkupplungsanordnung;
- Fig. 7: die in Fig. 6 dargestellte Kupplung zusammen mit einem diese nach außen hin dicht abschließenden Gehäuse.

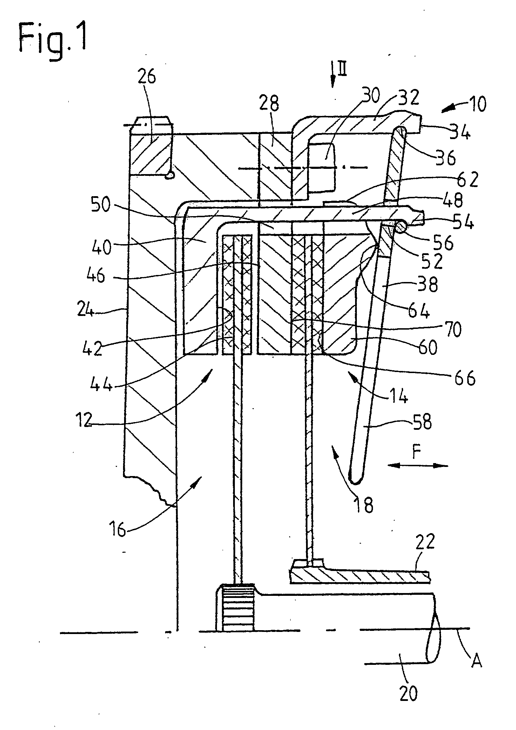

Eine erste Ausgestaltungsvariante einer erfindungsgemäßen Doppelkupplungsanordnung 10 ist in Fig. 1 dargestellt. Die Doppelkupplungsanordnung 10 umfasst zwei Kupplungsbereiche 12, 14, welche abwechselnd und wahlweise zur Drehmomentübertragung eingerückt bzw. wieder ausgerückt werden können. Dem Kupplungsbereich 12 ist eine Kupplungsscheibe 16 zugeordnet und dem Kupplungsbereich 14 ist eine Kupplungsscheibe 18 zugeordnet. Jede der Kupplungsscheiben 16, 18 ist mit jeweiligen Abtriebsorganen 20, 22, beispielsweise koaxial zueinander positionierten Getriebeeingangswellen, zur gemeinsamen Drehung verbunden.

Die Doppelkupplungsanordnung 10 umfasst ferner ein mit einer nicht dargestellten Antriebswelle, beispielsweise einer Kurbelwelle, zur gemeinsamen Drehung um eine Drehachse A fest verbundenes, z.B. topfartig ausgebildetes Schwungrad 24, das radial außen beispielsweise einen Anlasserzahnkranz 26 tragen kann. An seinem offenen Ende trägt das Schwungrad 24 ein Zwischenscheibenelement 28, welches am Schwungrad 24 durch eine Mehrzahl von Schraubbolzen 30 o. dgl. festgelegt ist. Durch die Schraubbolzen 30 ist ferner ein Kraftspeicherträger 32 mit dem Schwungrad 24 bzw. dem Zwischenscheibenelement 28 fest verbunden. Der Kraftspeicherträger 32 ist entweder ebenfalls topfartig mit offenem Topfboden ausgebildet oder weist mehrere sich axial erstreckende Armabschnitte 34 auf, die in ihrem axialen Endbereich durch Einrollen o. dgl. eine Einsenkung 36 aufweisen. In diese Einsenkung 36 ist der radial äußere Umfangsbereich eines beispielsweise als Membranfeder oder Tellerfeder ausgebildeten Kraftspeichers 38 derart eingesetzt, dass er dort festgehalten ist.

Der Kupplungsbereich 12 weist eine erste Anpressplatte 40 auf, die an ihrer dem Zwischenscheibenelement 28 zugewandten axialen Seite eine erste Reibfläche 42 für die Reibbeläge 44 der Kupplungsscheibe 12 aufweist. Dementsprechend weist das Zwischenscheibenelement 28 an seiner der Anpressplatte 40 zugewandten Seite eine zweite Reibfläche 46 des ersten Kupplungsbereichs 12 auf. Die Anpressplatte 40 weist eine Mehrzahl von sich axial erstreckenden Kopplungsarmen 48 auf, die entsprechende Öffnungen 50 im Zwischenscheibenelement 28 durchsetzen und ferner entsprechende Öffnungen 52 im Kraftspeicher 38 durchsetzen. An ihrem über den Kraftspeicher 38 axial hinausragenden Endabschnitt 54 bilden die Kopplungsarmabschnitte 48 durch Umformung, beispielsweise Verrollen o. dgl., eine Hinterschneidung, in welcher ein nach radial außen vorgespannter Drahtring 56 sitzt. Auf diese Art und Weise ist die Anpressplatte 40 mit dem Kraftspeicher 38 zur Axialbewegung verkoppelt, d.h., wird der Kraftspeicher 38 in der Darstellung der Fig. 1 in seinem inneren Endbereich 58 vom Schwungrad 24 weggezogen, so nimmt er die Anpressplatte 40 mit. Es sei darauf hingewiesen, dass die Anpressplatte 40 beispielsweise durch Tangentialblattfedern (nicht dargestellt) o. dgl. mit dem Zwischenscheibenelement 28 oder dem Schwungrad 94 zur gemeinsamen Drehungen bezüglich diesem jedoch axial bewegbar gekoppelt sein kann.

Dem Kupplungsbereich 14 ist ebenfalls eine Anpressplatte 60 zugeordnet, die beispielsweise mit dem Zwischenscheibenelement 28 oder dem Schwungrad 24 durch Tangentialblattfedern o. dgl. im Wesentlichen drehfest, bezüglich diesem jedoch axial verlagerbar verbunden ist. Im radial äußeren Bereich weist die Anpressplatte 60 Durchtrittsbereiche 62 auf, durch welche die Kopplungsarmabschnitte 48 der Anpressplatte 40 axial hindurchgreifen können. Die Anpressplatte 60 weist ferner einen Auflage- oder Schneidenbereich 64 auf, auf welchem der Kraftspeicher 38 mit einem radial mittleren Bereich zur Auflage kommen kann. Es sei noch darauf hingewiesen, dass die Anpressplatte 60 eine erste Reibfläche 66 für die Reibbeläge 68 der Kupplungsscheibe 18 aufweist, und in entsprechender Weise weist das Zwischenscheibenelement 28 eine zweite Reibfläche 70 für die Kupplungsscheibe 18 des zweiten Kupplungsbereichs 14 auf.

Im Folgenden wird die Funktionsweise der in Fig. 1 dargestellten Doppelkupplungsanordnung 10 beschrieben. In Fig. 1 ist eine stabile Lage des Kraftspeichers 38 dargestellt, in welcher dieser die Anpressplatte 60 auf die Kupplungsscheibe 18 zu presst und somit den zweiten Kupplungsbereich 14 in seiner Drehmoment übertragenden Position hält. Die Anpressplatte 40 ist, beispielsweise bedingt durch die Vorspannkraft von Tangentialblattfedern o. dgl., von der Kupplungsscheibe 16 abgehoben, so dass der erste Kupplungsbereich 12 in seiner ausgerückten Lage gehalten ist. Wird nun durch einen Krafterzeugungsmechanismus, angedeutet durch einen Kraftpfeil F eine Kraft in Richtung vom Schwungrad 24 weg auf das Innere Ende 58 des Kraftspeichers 38 ausgeübt, so wird diese zunehmend in eine abgeflachte Positionierung und somit in eine labile Lage gebracht. Dieser Bewegung folgen die beiden Anpressplatten 40, 60, wobei die Anpressplatte 40 über die Kopplungsarmabschnitte 48 gezogen wird, während die Anpressplatte 60 beispielsweise durch die Vorspannkraft von Tangentialblattfedern o. dgl. von der zugeordneten Kupplungsscheibe 18 abhebt. Bei Weiterbewegung des Kraftspeichers 38 in dieser Richtung kommt dann die Anpressplatte 40 in eine Lage, in welcher sie die Kupplungsscheibe 16 gegen das Zwischenscheibenelement 28 presst und somit den ersten Kupplungsbereich 12 in seinen Drehmomentübertragungszustand bringt, während der zweite Kupplungsbereich 14 in einen Zustand gebracht wird, in welcher er kein Drehmoment mehr zu übertragen vermag. Diese Weiterbewegung des Kraftspeichers 38 kann entweder induziert werden durch eine anhaltende Betätigungskrafterzeugung durch den Krafterzeugungsmechanismus, oder kann auch dadurch induziert werden, dass der Kraftspeicher 38 in eine zweite stabile Lage übergeht, in welcher er bezüglich einer zur Drehachse A orthogonal stehenden Ebene zur Positionierung gemäß Fig. 1 genau entgegengesetzt konusartig geneigt ist. Der Krafterzeugungsmechanismus hat dann lediglich die Funktion, den Anstoß zum Umschnappen des Kraftspeichers zu geben bzw. diesen in geführter Art und Weise in die jeweiligen stabilen Zustände überzuführen.

Es sei darauf hingewiesen, dass im Verlaufe eines derartigen Umschaltvorgangs vorzugsweise eine Positionierung eingenommen wird, in welcher keiner der beiden Kupplungsbereiche 12, 14 zur vollständigen Drehmomentübertragung eingerückt ist, d.h. entweder schlupfen beide Kupplungsbereiche 12, 14 oder beide Kupplungsbereiche 12, 14 sind in einem Zustand, in welchem sie kein Drehmoment übertragen können.

Es sei weiter darauf hingewiesen, dass der Krafterzeugungsmechanismus von beliebigem Aufbau sein kann, beispielsweise von einem elektrischen Aktuator gebildet sein, jedoch selbstverständlich auch hydraulisch oder pneumatisch die Kraft zur Betätigung des Kraftspeichers 38 aufbringen kann.

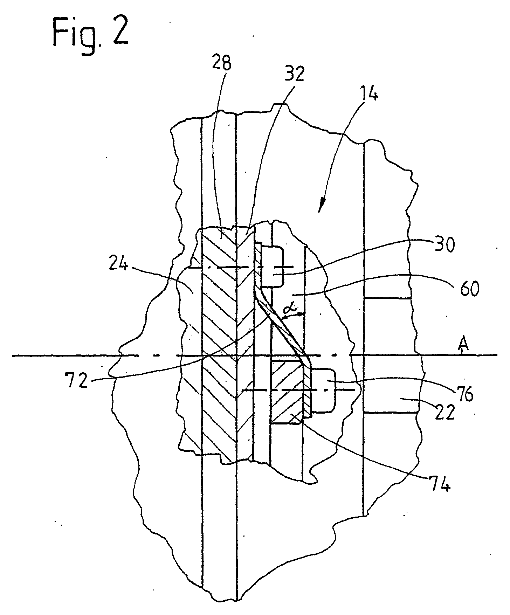

Die Fig. 2 zeigt eine Möglichkeit, die Anpressplatte 60, und entsprechend selbstverständlich auch die Anpressplatte 40, bezüglich des Schwungrads 24 bzw. des Zwischenscheibenelements 28 drehfest zu halten. Man erkennt, dass durch die Schraubbolzen 30 ferner Tangentialblattfedern 72 mit einem ihrer Endbereiche bezüglich des Schwungrads 24 festgelegt werden. Diese Tangentialblattfedern erstrecken sich bezüglich einer zur Drehachse A orthogonal stehenden Ebene dann mit einem Winkel α zu nach radial außen vorstehenden Abschnitten 74 der Anpressplatte 60 und sind an diesen durch Schraubbolzen 76 o. dgl. festgelegt. Wird die Anpressplatte 60 auf das Zwischenscheibenelement 28 zu bewegt, um die Kupplungsscheibe 18 mit den Reibbelägen 68 einzuklemmen, so wird im Zugbetrieb, wenn beispielsweise bei Betrachtung von radial außen her das Schwungrad 24 zusammen mit der Anpressplatte 60 in der Darstellung der Fig. 2 sich nach oben bewegen wird, eine Reibungsbremskraft auf die Anpressplatte 60 ausgeübt, welche diese verzögert. Durch die schräggestellten Tangentialblattfedern wird diese Verzögerungskraft aufgeteilt in eine Komponente, welche normal zu den Reibbelägen 68 der Kupplungsscheibe 18 und auf diese zu gerichtet ist, so dass eine selbstverstärkende Reibkraftwirkung dieses Kupplungsbereichs 14 auftritt.

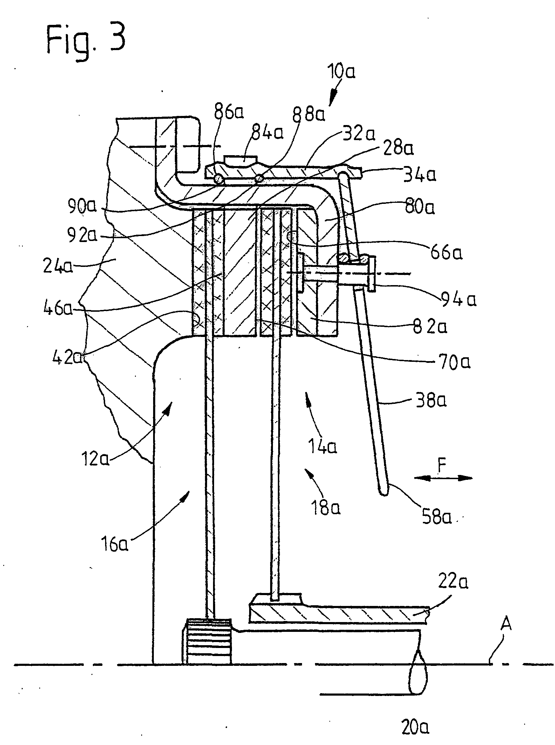

Die Fig. 3 zeigt eine alternative Ausgestaltungsart einer erfindungsgemäßen Doppelkupplungsanordnung. Komponenten, welche vorangehend beschriebenen Komponenten hinsichtlich Aufbau bzw. Funktion entsprechen, sind mit den gleichen Bezugszeichen unter Hinzufügung des Anhangs "a" bezeichnet.

Man erkennt in Fig. 3, dass am Schwungrad 24a nunmehr radial außen ein Gehäuse 80a festgelegt ist. Das Schwungrad 24a bildet nunmehr mit seinem Oberflächenbereich 42a eine erste Reibfläche des ersten Kupplungsbereichs 12a. In entsprechender Weise ist am Gehäuse 80a ein Reibflächenbauteil 82a festgelegt, das mit seiner zum Schwungrad 24a hinweisenden Oberfläche eine erste Reibfläche 66a des Kupplungsbereichs 14a bildet. Das Zwischenscheibenelement 28a ist nunmehr axial bewegbar und greift mit jeweiligen Armabschnitten 84a durch schlitzartige Ausnehmungen im Gehäuse 80a hindurch. Der Kraftspeicherträger 32a ist hülsenartig ausgebildet und weist den Armabschnitten 84a zugeordnet Durchgriffsausnehmungen auf, beispielsweise durch schlitzartige Öffnungen gebildet. Axial an beiden Endbereichen dieser Durchtrittsausnehmungen sind sickenartige Vertiefungen 86a, 88a gebildet, in welche nach radial außen vorgespannte Drahtringe 90a, 92a eingreifen, um das Zwischenscheibenelement 28a bezüglich der Kraftspeicheraufnahme 32a axial festzulegen.

Der Kraftspeicher 38a ist nunmehr über Distanzbolzen 94a o. dgl. an der Außenseite des Gehäuses 80a, d.h. der vom Schwungrad 24a weg gewandt liegenden Seite desselben, verschwenkbar getragen. Eine Verschwenkbewegung des Kraftspeichers 38a hat zur Folge, dass der Kraftspeicherträger 32a axial verschoben wird und damit auch das Zwischenscheibenelement 28a axial verschoben wird. Es sei beispielsweise wieder angenommen, dass der Kraftspeicher 38a grundsätzlich in die in Fig. 3 dargestellte Position vorgespannt ist, wodurch der Kupplungsbereich 12a in seiner eingerückten Lage gehalten ist. Durch Beaufschlagung im radial inneren Bereich 58a vermittels des Krafterzeugungsmechanismus kann der Kraftspeicher 38a dann wieder in die labile Lage gebracht werden, in welcher zunächst keiner der Kupplungsbereiche 12a, 14a in einem Drehmomentübertragungszustand ist, und kann dann weiterbewegt werden, beispielsweise in eine zweite stabile Lage, in welcher nunmehr der Kupplungsbereich 14a eingerückt gehalten ist.

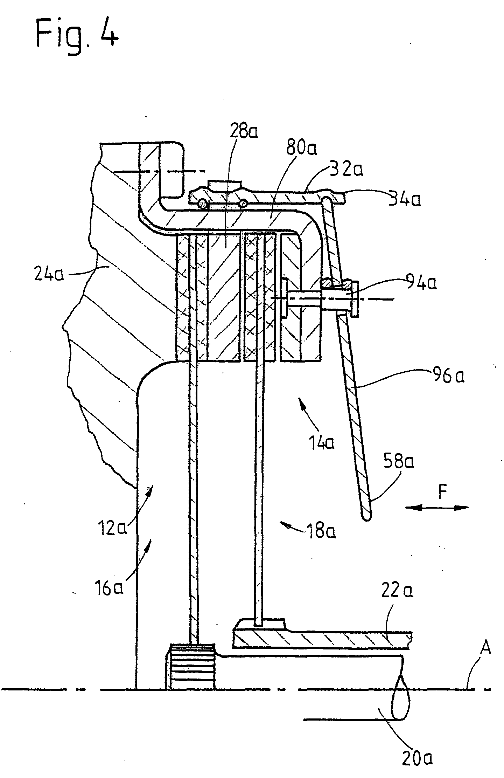

Eine Abwandlung dieser Ausgestaltungsvariante ist in Fig. 4 gezeigt. Man erkennt, dass hier kein Kraftspeicher vorgesehen ist, sondern eine Mehrzahl von in Umfangsrichtung verteilt liegenden Kraftübertragungshebeln 96a in den vorangehend beschriebenen Träger 32a eingreifen. Die Kraftübertragungshebel 96a sind ebenso wie der vorangehend beschriebene Kraftspeicher am Gehäuse 80a an dessen Außenseite schwenkbar getragen. Eine Krafteinwirkung auf die radial inneren Enden 58a dieser Kraftübertragungshebel 96a führt zur axialen Verschiebung des Zwischenscheibenelements 28a und somit zum Umschalten zwischen den beiden Kupplungsbereichen 12a, 14a.

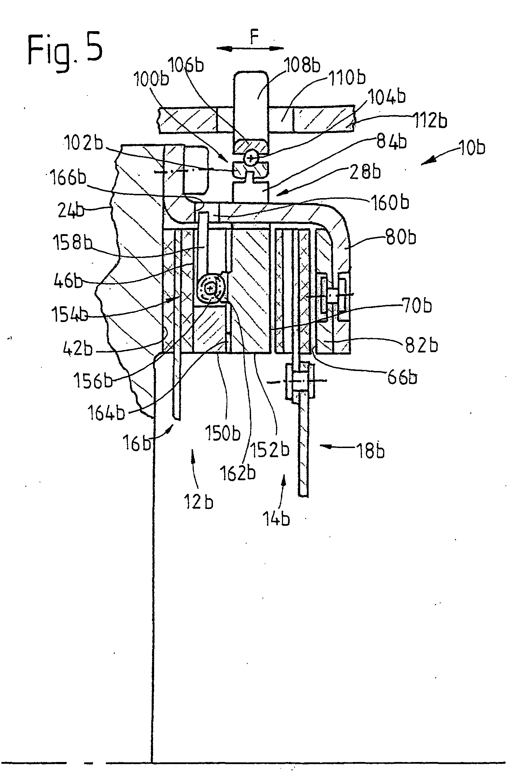

Eine weitere alternative Ausgestaltungsart einer erfindungsgemäßen Doppelkupplungsanordnung ist in Fig. 5 dargestellt. Komponenten, welche vorangehend beschriebenen Komponenten hinsichtlich Aufbau bzw. Funktion entsprechen, sind mit den gleichen Bezugszeichen unter Hinfügung des Anhangs "b" beschrieben.

Der in Fig. 5 dargestellte Aufbau entspricht in wesentlichen Teilen dem vorangehend mit Bezug auf die Fig. 3 und 4 beschriebenen Aufbau. Es wird insofern lediglich auf die konstruktiven Unterschiede eingegangen.

Man erkennt in Fig. 5, dass das Zwischenscheibenelement 28b mit seinen Armabschnitten 84b nunmehr mit einem das Gehäuse 80b radial außen umgebenden Lager 100b, beispielsweise einem Lagerinnenring 102b, fest gekoppelt ist. Ein über mehrere Wälzkörper, beispielsweise Kugeln 104b, bezüglich des Lagerinnenrings drehbar gehaltener Lageraußenring 106b ist mit einem radial vorspringenden Kraftübertragungselement 108b fest gekoppelt oder integral ausgebildet, welches eine Durchtrittsöffnung 110b in einer allgemein mit 112b bezeichneten Kupplungsglocke o. dgl. durchsetzt. Auf dieses Kraftübertragungselement kann dann der Krafterzeugungsmechanismus, welcher hier wiederum durch den Kraftpfeil F angedeutet ist, zur axialen Verschiebung des Zwischenscheibenelements 28b und zum Umschalten zwischen den beiden Kupplungsbereichen 12b und 14b betätigt werden. Die Betätigungskrafterzeugungseinrichtung kann beispielsweise wieder einen Hydraulikantrieb, einen elektromotorischen Antrieb o. dgl. umfassen.

Ferner erkennt man in Fig. 5, dass das Zwischenscheibenelement 28b mehrteilig aufgebaut ist, um, wie im Folgenden beschrieben, eine Verschleißkompensation durchführen zu können. Wie man in Fig. 5 erkennt, ist das Zwischenscheibenelement 28b im Wesentlichen zweigeteilt und umfasst zwei Scheibenteile 150b, 152b. Zwischen diesen Scheibenteilen wirkt eine allgemein mit 154b bezeichnete Verschleißkompensationsanordnung. Diese umfasst wenigstens eine an dem Scheibenteil 150b um eine sich näherungsweise in Umfangsrichtung oder dazu tangential erstreckende Achse drehbare Schnecke 156b, die mit einem Antriebshebel 158b fest verbunden ist. Der Antriebshebel 158b erstreckt sich nach radial außen und greift in eine Öffnung 160b des Gehäuses 80b ein. Die Schnecke 156b kämmt mit einer Verzahnung 162b, die in Umfangsrichtung sich erstreckend an dem Scheibenteil 152b vorgesehen ist. Durch die Schnecke 156b und die Verzahnung 162b ist ein selbsthemmendes Getriebe vorgesehen. Die beiden Scheibenteile 150b, 152b liegen über jeweilige in Umfangsrichtung sich erstreckende Rampensegmente 164b aneinander an. Das heißt, jedes der Scheibenteile 150b, 152b weist derartige sich in Umfangsrichtung erstreckende Rampensegmente auf, die jeweils axial einem entsprechenden Rampensegment des anderen Scheibenteils gegenüber liegen. Bei Relativdrehung zwischen den beiden Scheibenteilen 150b, 152b gleiten deren aneinander anliegende Rampenflächen aneinander ab mit der Folge, dass die Gesamtaxialerstreckung der aus den beiden Scheibenteilen 150b, 152b gebildeten Baueinheit verändert werden kann.

Tritt nun im Betrieb bei den Reibbelägen der Kupplungsscheibe 16b ein Verschleiß auf, was zur Folge hat, dass im Bereich ihrer Reibbeläge die Kupplungsscheibe 16b axial dünner wird, so wandert das Zwischenscheibenelement 28b zunehmend näher an das Schwungrad 24b heran. Stößt dabei letztendlich dann der mit der Schnecke 156b fest verbundene oder diese zur Drehung antreibende Antriebshebel 158b an dem dem Schwungrad 24b nahen Rand 166b der Öffnung 160b an, so führt dies zu einer Drehbewegung der Schnecke, welche Drehbewegung der Schnecke durch die mit dieser kämmende Verzahnung 162b zu einer Verdrehung des Scheibenteils 152b um die Drehachse A bezüglich des Scheibenteils 150b führt. Dabei gleiten die angesprochenen Schräg- oder Rampenflächen 164b der beiden Scheibenteile 150b, 152b aneinander ab, und zwar in einem derartigen Sinne, dass die Gesamtaxialerstreckung der beiden Scheibenteile 150b, 152b bzw. der daraus gebildeten Baugruppe vergrößert wird. Es kann somit der im Bereich der Kupplungsscheibe 16b aufgetretene Verschleiß kompensiert werden.

Bei der Auslegung der Öffnung 160b muss darauf geachtet werden, dass beim Einrücken des Kupplungsbereichs 14b der Antriebshebel 158b nicht an dem vom Schwungrad 24b entfernten Rand derselben anstößt, da dies zu einer Rückstellung der Verschleißkompensationsanorndung 154b führen könnte.

Es sei hier darauf hingewiesen, dass selbstverständlich eine entsprechende Anordnung in Verbindung mit dem Kupplungsbereich 14b vorgesehen sein könnte, so dass letztendlich dann das Zwischenscheibenelement 28b drei Scheibenteile umfassen würde, wobei an den beiden axial äußeren Scheibenteilen entsprechende Schnecken oder Antriebsmechanismen vorzusehen wären und das Scheibenteil 152b an seinen beiden axialen Seiten Verzahnungen tragen würde, in welche die Schnecken eingreifen können.

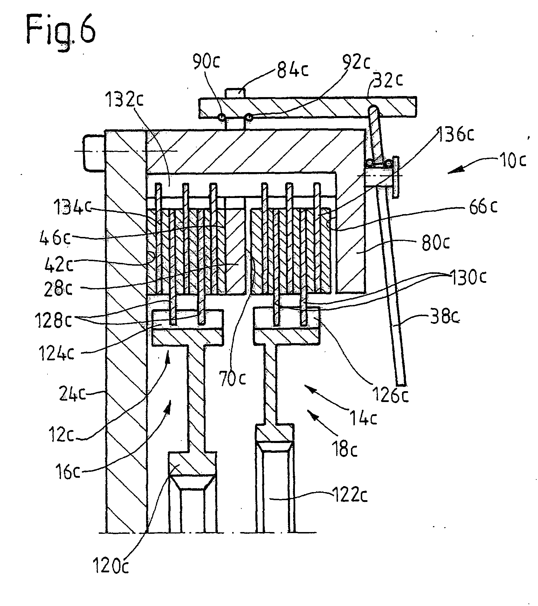

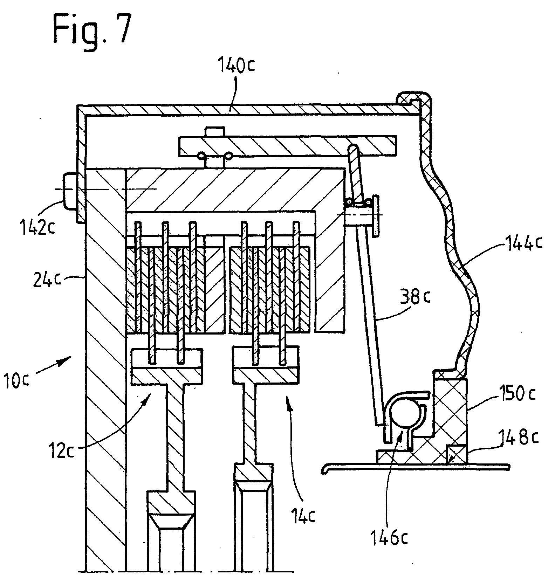

Eine weitere Variante der erfindungsgemäßen Doppelkupplungsanordnung ist in den Fig. 6 und 7 dargestellt. Komponenten, welche vorangehend beschriebenen Komponenten hinsichtlich Aufbau bzw. Funktion entsprechen, sind mit den gleichen Bezugszeichen unter Hinzufügung eines Anhangs "c" bezeichnet.

Die in den Fig. 6 und 7 dargestellte Doppelkupplungsanordnung 10c entspricht hinsichtlich ihrer Funktionsweise grundsätzlich der mit Bezug auf die Fig. 3 beschriebenen Ausgestaltungsvariante. Ein wesentlicher Unterschied liegt nunmehr darin, dass die Kupplung hier vom nasslaufenden Typ ist und als Kupplungsscheiben 16c bzw. 18c jeweilige Innenlamellenträger 120c, 122c aufweist, die mit den beiden hier nicht dargestellten Abtriebswellen zur gemeinsamen Drehung koppelbar sind. Diese beiden Innenlamellenträger 120c, 122c weisen in ihrem Außenumfangsbereich jeweils verzahnungsartige Konfigurationen 124c, 126c auf, in welche Innenlamellen 128c, 130c mit einer entsprechenden Konfiguration derart eingreifen, dass sie drehfest, jedoch axial bewegbar mit den Innenlamellenträgern 120c, 122c verbunden sind.

In entsprechender Weise weist das Gehäuse 80c nunmehr eine Verzahnungs- oder Mitnahmekonfiguration 132c auf, in welche Außenlamellen 134c bzw. 136c des Kupplungsbereichs 12c bzw. des Kupplungsbereichs 14c derart eingreifen, dass sie mit dem Gehäuse 80c drehfest, jedoch axial bewegbar verbunden sind. Die Innenlamellen 128c, 130c oder/und die Außenlamellen 132c, 136c tragen jeweilige Reibbeläge, die im eingerückten Zustand des jeweiligen Kupplungsbereichs 12c bzw. 14c dann reibend aneinander angreifen. Die jeweiligen axial letzten Reibbeläge liegen an der ersten Reibfläche 42c bzw. der zweiten Reibfläche 46c des Kupplungsbereichs 12c an oder liegen, im Falle des Kupplungsbereichs 14c, an der ersten Reibfläche 66c bzw. der zweiten Reibfläche 70c an.

In Fig. 7 erkennt man, dass die Kupplungsanordnung 10c radial außen von einem Abschlussgehäuse 140c umgeben ist, das beispielsweise am Schwungrad 24c durch Schraubbolzen 142c abdichtend festgelegt ist und das über ein elastisches Deckelelement 144c im Bereich des Kraftspeichers 38c axial abgeschlossen ist, wobei dieser elastische Deckel 144c bis nach radial innen an ein Ausrücklager 146c heranreicht, über welches eine Betätigungskraft auf den Kraftspeicher 38c übertragen werden kann. Ein bezüglich eines Getriebegehäuses oder eine der Antriebswellen durch ein Dichtelement 148c abgedichtet verschiebbares Druckelement 150c ist durch den Krafterzeugungsmechanismus zur Betätigung des Kraftspeichers 38c und somit zum Umschalten zwischen den beiden Kupplungsbereichen 12c bzw. 14c beaufschlagbar.

Es sei darauf hingewiesen, dass bei allen vorangehend beschriebenen Ausgestaltungsvarianten verschiedenste Änderungen möglich sind. So kann beispielsweise das Schwungrad allgemein auch als Zwei- oder Mehrmassenschwungrad aufgebaut sein, um bereits vor Drehmomenteneinleitung in die Kupplungsanordnung eine Drehschwingungsdämpfung vorzunehmen. Auch im Bereich der Kupplungsscheiben können in an sich bekannter Weise Drehschwingungsdämpfungseinrichtungen angeordnet sein. Ferner ist es möglich, die Kupplungsanordnung mit einem Kurbelwellen-Starter-Generatorsystem zu kombinieren, das neben der Funktion, ein Antriebsaggregat zu starten, auch aktiv zur Schwingungsdämpfung beitragen kann. Auch ist es grundsätzlich möglich, die einzelnen Reibflächen nicht mit zur Achsrichtung parallelen Normalvektoren auszugestalten, sondern diese auch bezüglich der Achsrichtung geneigt verlaufend, beispielsweise konusartig auszubilden. Weiterhin können die beiden Kupplungsbereiche mit unterschiedlichen Durchmessern ausgestaltet werden, um beispielsweise den Kupplungsbereich mit größerem Durchmesser als Anfahrkupplung zu nutzen, während der andere Kupplungsbereich zur Durchführung von Gangwechseln während der Fahrt genutzt wird. Auch ist es weiterhin möglich, im Bereich der Kupplungsscheiben bzw. der Lamellen Belagfedern vorzusehen.

## Patentansprüche

1. Doppelkupplungsanordnung, umfassend einen ersten Kupplungsbereich (12; 12a; 12b; 12c) zur wahlweisen Herstellung einer Drehmomentübertragungsverbindung zwischen einem Antriebsorgan und einem ersten Abtriebsorgan (20; 20a) und einen zweiten Kupplungsbereich (14; 14a; 14b; 14c) zur wahlweisen Herstellung einer Drehmomentübertragungsverbindung zwischen dem Antriebsorgan und einem zweiten Abtriebsorgan (22; 22a),
**gekennzeichnet durch** einen gemeinsamen Ausrückmechanismus (38, F; 38a, F; 96a, F; 108b, F; 38c, F), **durch** welchen der erste Kupplungsbereich (12; 12a; 12b; 12c) und der zweite Kupplungsbereich (14; 14a; 14b; 14c) jeweils zur Herstellung beziehungsweise zum Aufheben eines Drehmomentübertragungszustands betätigbar sind.

2. Doppelkupplungsanordnung nach Anspruch 1,
**dadurch gekennzeichnet, dass** dann, wenn durch den Ausrückmechanismus (38, F; 38a, F; 96a, F; 108b, F; 38c, F) ein Kupplungsbereich (12, 14; 12a, 14a; 12b, 14b; 12c, 14c) zum Herstellen des Drehmomentübertragungszustands betätigt ist, der andere Kupplungsbereich (12, 14; 12a, 14a; 12b, 14b; 12c, 14c) zum Aufheben des Drehmomentübertragungszustands betätigt ist.

3. Doppelkupplungsanordnung nach Anspruch 1 oder 2,
**gekennzeichnet durch** einen Kraftspeicher (38; 38a; 38c), **durch** welchen wenigstens einer der Kupplungsbereiche (12, 14; 12a, 14a; 12c, 14c) in seinen Drehmomentübertragungszustand vorgespannt oder vorspannbar ist.

4. Doppelkupplungsanordnung nach einem der Ansprüche 1 bis 3,
**gekennzeichnet durch** einen Krafterzeugungsmechanismus (F) zur Erzeugung einer Betätigungskraft, **durch** welche wenigstens einer der Kupplungsbereiche (12, 14; 12a, 14a; 12b, 14b; 12c, 14c) in seinen Drehmomentübertragungszustand bringbar ist.

5. Doppelkupplungsanordnung nach Anspruch 3 und Anspruch 4,
**dadurch gekennzeichnet, dass** durch den Kraftspeicher (38; 38a; 38c) einer (14; 12a; 12c) der Kupplungsbereiche (12, 14; 12a, 14a; 12c, 14c) in seinen Drehmomentübertragungszustand vorgespannt ist, und **dass** durch den Krafterzeugungsmechanismus (F) der Kraftspeicher (38; 38a; 38b) zum Aufheben des Drehmomentübertragungszustands des einen Kupplungsbereichs (14; 12a; 12c) und zum Herstellen des Drehmomentübertragungszustands des anderen (12; 14a; 14c) Kupplungsbereichs bewegbar ist.

6. Doppelkupplungsanordnung nach Anspruch 3 und Anspruch 4,
**dadurch gekennzeichnet, dass** der Kraftspeicher (38; 38a; 38c) ein bistabiler Kraftspeicher ist, **dass** der Kraftspeicher (38; 38a; 38c) durch den Krafterzeugungsmechanismus (F) zwischen seinen beiden stabilen Zuständen umschaltbar ist, und **dass** in jedem der stabilen Zustände durch den Kraftspeicher (38; 38a; 38c) einer der Kupplungsbereiche (12, 14; 12a, 14a; 12b, 14b) in seinen Drehmomentübertragungszustand vorgespannt ist.

7. Doppelkupplungsanordnung nach Anspruch 4,
**gekennzeichnet durch** eine Übertragungshebelanordnung (96a), **durch** welche eine Betätigungskraft des Krafterzeugungsmechanismus (F) auf den ersten Kupplungsbereich (12a) und den zweiten Kupplungsbereich (14a) übertragbar ist.

8. Doppelkupplungsanordnung nach einem der Ansprüche 1 bis 7,
**dadurch gekennzeichnet, dass** der erste Kupplungsbereich (12; 12a; 12b; 12c) eine erste Reibfläche (42; 42a; 42b; 42c) aufweist, welche zur Anlage an einer ersten Kupplungsscheibenanordnung (16; 16a; 16b; 16c) bringbar ist, **dass** der zweite Kupplungsbereich (14; 14a; 14b; 14c) eine erste Reibfläche (66; 66a; 66b; 66c) aufweist, welche zur Anlage an einer zweiten Kupplungsscheibe (18; 18a; 18b; 18c) bringbar ist, und **dass** dem ersten und dem zweiten Kupplungsbereich (12, 14; 12a, 14a; 12b; 14b; 12c; 14c) zugeordnet eine Zwischenscheibenanordnung (28; 28a; 28b; 28c) mit einer zweiten Reibfläche (46; 46a; 46b; 46c) für den ersten Kupplungsbereich (12; 12a; 12b; 12c) und einer zweiten Reibfläche (70; 70a; 70b; 70c) für den zweiten Kupplungsbereich (14; 14a; 14b; 14c) vorgesehen ist.

9. Doppelkupplungsanordnung nach Anspruch 8,
**dadurch gekennzeichnet, dass** zur Herstellung des Drehmomentübertragungszustands von einem der Kupplungsbereiche (12, 14) und zum Aufheben des Drehmomentübertragungszustands des anderen Kupplungsbereichs bei im Wesentlichen feststehenden zweiten Reibflächen (46, 70) von erstem Kupplungsbereich (12) und zweitem Kupplungsbereich (14) die erste Reibfläche (42) des einen Kupplungsbereichs auf die zweite Reibfläche (46) des einen Kupplungsbereichs zu bewegbar ist und die erste Reibfläche (66) des anderen Kupplungsbereichs von der zweiten Reibfläche (70) des anderen Kupplungsbereichs weg bewegbar ist.

10. Doppelkupplungsanordnung nach Anspruch 9,
**dadurch gekennzeichnet, dass** ein die erste Reibfläche (42) des ersten Kupplungsbereichs (12) tragendes Bauteil (40) und ein die erste Reibfläche (66) des zweiten Kupplungsbereichs (14) tragendes Bauteil (60) mit dem Ausrückmechanismus (38, F) zur Bewegung bezüglich der jeweiligen zweiten Reibfläche (46, 70) gekoppelt sind.

11. Doppelkupplungsanordnung nach Anspruch 8,
**dadurch gekennzeichnet, dass** zur Herstellung des Drehmomentübertragungszustands von einem der Kupplungsbereiche (12a, 14a; 12b, 14b; 12c, 14c) und zum Aufheben des Drehmomentübertragungszustands des anderen Kupplungsbereichs bei im Wesentlichen feststehenden ersten Reibflächen (42a, 66a; 42b, 66b; 42c, 66c) des ersten Kupplungsbereichs (12a; 12b; 12c) und des zweiten Kupplungsbereichs (14a; 14b; 14c) die zweite Reibfläche (46a; 46b; 46c) des einen Kupplungsbereichs auf die erste Reibfläche (42a; 42b; 42c) des einen Kupplungsbereichs zu bewegbar ist und dabei die zweite Reibfläche (70a; 70b; 70c) des anderen Kupplungsbereichs von der ersten Reibfläche (66a; 66b; 66c) des anderen Kupplungsbereichs weg bewegbar ist.

12. Doppelkupplungsanordnung nach einem der Ansprüche 1 bis 11,
**gekennzeichnet durch** eine Verschleißkompensationsanordnung (154b) zum Kompensieren von bei dem ersten Kupplungsbereich (12b) oder/und dem zweiten Kupplungsbereich (14b) aufgetretenem Verschleiß.
